# EUROPEAN PATENT APPLICATION

(11) **EP 2 842 415 A1**
(43) Date of publication of application: **04.03.2015**
(21) Application number: 14182076.1
(22) Date of filing: 25.08.2014
(51) Int. Cl.: A01G 9/02

(54) **Means for vertical cultivation of plants and method of providing such means**

(30) Priority: 26.08.2013 SE 1300559
(71) Applicant: Torle, Patric, 262 96 Ängelholm (SE)
(72) Inventor: Torle, Patric, 262 96 Ängelholm (SE)
(74) Representative: Nilsson, Camilla Anette

(57) **Abstract**

Means for vertical cultivation by growing plants comprising a panel member (2, 3) arranged on its end having an outer layer (9), in which lead-throughs (6) for plants are taken up. The panel member further has an upper end surface (5) which adjoins a front side as well as a back side of the member (2, 3). Alongside the edges of its upper end surface (5) the panel member (2, 3) is provided with at least one elongated chute (10).

## Description

### TECHNICAL FIELD

The invention relates to a means for vertical cultivation by growing of plants comprising a panel member arranged on its end having a outer layer, in which lead-throughs for plants are provided, and an upper end surface adjoining a front side as well as a back side of the panel member.

The invention also relates to the use of an insulated wall unit in order to provide a means according to the above.

Finally, the invention also relates to a method of providing such a means.

### PRIOR ART

There are prior art means for standing-up, substantially vertical, cultivation. One example of such a means is disclosed in EP 24 28 110. In this means a hydrophilic felt material is arranged between a rear, waterproof layer and a front surface layer, in which there are openings for plants. Further, there is comprised a net or grid in order to hold the felt material. All of the layers are soft so that the means can be wound up. A perforated tube is inserted at the top of the means for the supply of water and water soluble nutrients. Surplus water is let out at the bottom of the means through openings. The soft means is intended to be arranged at a wall or the like, partly since it is not self-supporting, and partly since it is one-sided.

The disclosed structure works relatively well, at least in some climates and for certain plant types, but still exhibits drawbacks. Since the water is drained at the bottom, it is only suitable for outside use, and then above such a ground where the water dripping out of the means does not cause damages or discoloration, which are difficult to remove. At the same time it is necessary to arrange it adjacent to a wall, which limits the option with regard to its placement.

FR 26 34 971 shows another example of a similar means, which has a waterproof, standing-up panel, which is covered with a felt material. Bands of felt are arranged thereon, in order to hold plants. Again, water is added through a perforated tube at the upper edge of the means. At the bottom a tray is arranged for collecting and recirculation of water, which is supplied to the felt material.

Also this means has some disadvantages. Certainly, it is self-supporting and has a collecting vessel for taking care of superfluous water, but there is an immediate risk that it will be difficult to control the water supply. With a low feed and a high surrounding temperature there is a great risk that the evaporation from the felt material is so extensive that only the plants in the upper part of the means, close to the water supply, will get enough water. The evaporation can also result in a change of concentration of the nutrient in the water, which might affect sensitive plants negatively.

A higher water feed can compensate for the loss through evaporation, but involves a risk that the plants in the upper part will be given to large amounts of water. Further, if the temperature drops, the evaporation will be reduced and there is a risk that also the plants in the lower part of the means will receive a too large water feed, which only partly can be compensated for by water being drained off at the lower edge of the means. The problems become more expressed with an increasing size of the means, since the evaporation is related to the surface of the means.

Common for the two means is also that they are limited in size, and the possibilities of adjusting their size to the place where they are supposed to be placed are very small.

### THE PROBLEM

Accordingly, there is a need for a means for vertical cultivation by growing where the size and placement are selectable at will, and wherein the water feed in the means is not problematic in the ways that have been described above.

### THE SOLUTION OF THE PROBLEM

The aim of the invention will be achieved if the means described in the preamble is given the characterizing feature that the member along the edges of its upper end surface is provided with at least one elongated chute.

Further advantages will be achieved if the means is also given one or several characterizing features according to the claims 2 -7.

Regarding the method of providing the means, the aim is achieved if the method is characterized in that a prefabricated insulated wall unit is arranged so that an end surface having chutes is turned upwards, and in that lead-throughs are taken up through an outer layer of the member for the insertion of plants.

Further advantages are achieved when the method is further given characterizing features according to claim 10.

### SUMMARY OF DRAWINGS

The invention will now be described with references to the accompanying drawings. In these the respective Figures show:
- Fig. 1: a partly cut-up view in perspective of a means according to the invention comprising a number of panel members;
- Fig. 2: a cross sectional view in perspective of a horizontal joint between two members according to Fig. 1; and
- Fig. 3: a view according to Fig. 2 showing a vertical joint between two panel members.

### PREFERRED EMBODIMENET

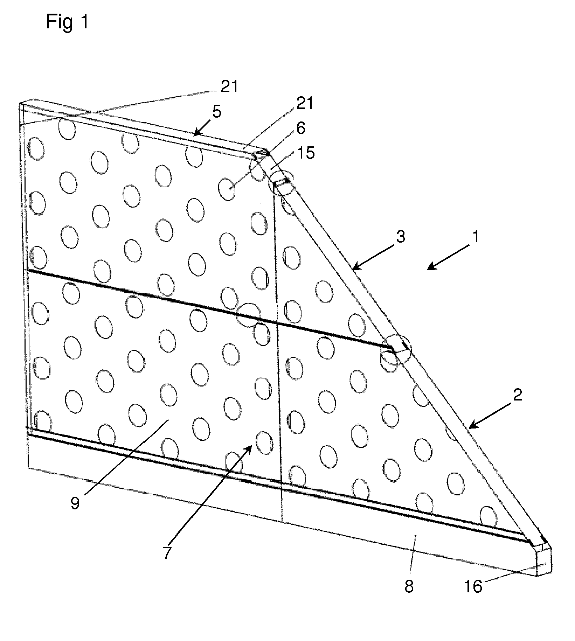

In Fig. 1 is shown a growing-wall 1 according to the invention, comprising four mutually connected panel members 2, 3. Since the members 2, 3 are connected to each other only one watering unit is needed, being arranged substantially at the upper end surface 5 of the upper panel members 3. The panel members 2, 3 have lead-throughs 6 through their surface layers 9, at least on the sides intended to be their front sides 7, but also the back sides can be provided with lead-throughs 6 for those applications where a growing-wall having plants on both sides is desired. At the bottom, at the lower edge of the lower panel members 2, is arranged a collecting vessel 8 for collecting water oozing out from the bottom of the lower panel members 1. A pump 16 for supply of water to the growing-wall 1 is also arranged in association with the collecting vessel 8.

Each of the panel members 2, 3 has a surface layer 9, which, as is mentioned above, is completely or partly provided with lead-throughs 6. Plants are arranged in the lead-throughs 6, so that their roots extend inwards for a shorter or longer distance into the filling 15 of the respective panel member 2, 3.

The lead-throughs 6 can be arranged in different configurations, such as in rows and columns, in rows in which the lead-throughs 6 are displaced in relation to those on the row above, such as is shown in Fig. 1, in circles or in random configurations.

The surface layer 9 consists of some suitable material, such as metal or hard plastic, which in itself is form-stable so that a self-supporting member is formed, which does not need any support to be kept standing in an upright, substantially vertical position. The material should also in principle be water impermeable, despite form the lead-throughs 6. Hereby water is prevented from evaporation through the surface layer 9 in a hard-to-control way. The water which is not consumed by the plants will be led downwards through the member 2, 3 and only the consumption by the plants controls how much water and nutrition have to be supplied. Further the concentration of the nutrition in the water is kept substantially constant in the whole member 2, 3.

The filling 15 is preferably a water absorbing insulation panel, which conducts water well. Superfluous water, which is not directly used by the plants, will not be retained, but is instead led downwards under the influence of gravity. There is no risk for the plants to receive to much water, since the superfluous water is led away. Since the water does not stand still there is no breeding ground for mildew or bad smell.

The panel members 2, 3 can be joined to each other so that a growing-wall 1 with an optional size and configuration can be built up. The upper and lower end surfaces on the respective member 2, 3 are open, so that water from a watering means can be let in and pass from an upper member 3 to a lower member 2, and finally be drained at the very bottom to the collecting vessel 8. In order to keep the above advantages with minimizing the losses of water and fertilizer, which pass through the member, it is desirable that the interconnection is free from leakage. It is further an aesthetic advantage, in case the surface layer 9 of the members 2, 3 are visible when plants are sitting in the lead-throughs, since leakage could discoloration the surfaces or cause deposits thereon.

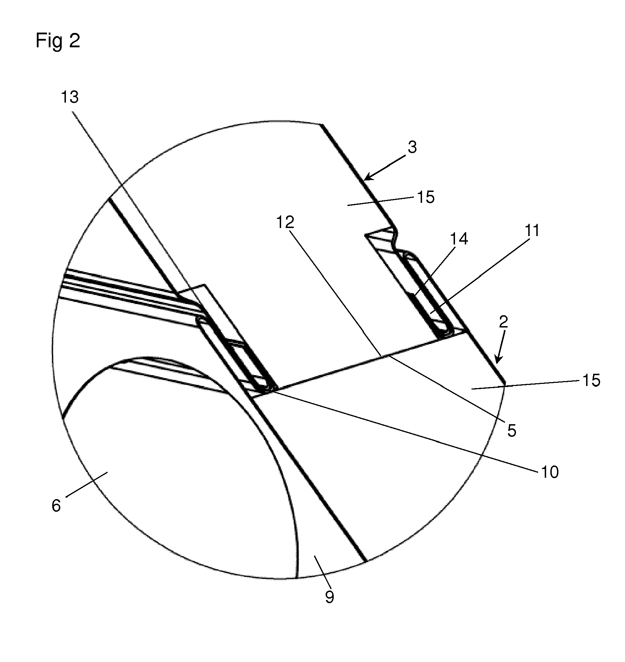

The panel members 2, 3 can be anchored at each other with the aid of some of the existing fittings which are known in the art for connecting two members positioned adjacent to each other in one and the same plane. According to a preferred embodiment, which is shown in the Figs., especially in Fig. 2, a horizontal joint 13 is provided by folding the upper and lower edges, respectively, of the surface layers, so that these can be joined to each other.

Along the edges of the upper end surface 5 on each of the panel members 2, 3, a folding is arranged having at least one chute 10, as is shown in the cross sectional view of Fig. 2. In the preferred embodiment a corresponding folding is arranged having a bead 11 with a complementary form and placement at the edges of the end surface 12 of the respective panel member 2, 3. Strictly speaking the respective bead 11 in the preferred embodiment is designed in the same way as a chute 10, but with an orientation and aim which makes it easily connectable with a chute 10 on an adjacent member. In the preferred embodiment there are foldings with the chute 10 and the bead 11 on each side of the panel member 2, 3. The chutes 10 and beads 11 have several functions.

A first function is that the foldings with chutes 10 and beads 11 have a guiding function when the panel members shall be positioned in one and the same plane in order to be joined together with the optional fittings which are discussed above. When the beads 11 cooperate with the chutes 10 the panel members 2, 3 are guided in their entirety to extend in the same plane, before the assembly, and distorsions in the growing-wall 1 established by the panel members 2, 3 are avoided. In an ideal situation the guiding-in is sufficient for holding the members 2, 3 in place in relation to each other, and further anchoring is superfluous.

When the growing-wall 1 is erected it is unavoidable that the joints 13 between the members 2, 3 are exhibited to strains. The folding, however, assist to the stabilization of the joint 13, so that its ability to absorb strains at an angle to the plane of the panel members 2, 3 is high without having to use a more solid fitting lying on the outside. Forces across the plane of the panel members 2, 3 will be taken up at the contact surfaces between the chutes 10 and the beads 11 along the large part of the joint 13. This will result in a considerably stronger joint 13.

Finally the folding will also prevent leakage through the joint 13 from its filling material to the outside. Water moving downwards inside the upper panel member 3 will be caught in the inside of the beads 11 to the extent it is transported close to the surface layer 9. When the insides of the beads 11 are filled up with water this will begin to ooze over the inner edge 14 of the bead and further down into the lower panel member 2. Inside the foldings 10, 11 of the panel members 2, 3 the end surfaces 5, 12 are open so that the filling 15 in the respective panel member 2, 3 is exposed. Water oozing downwards in the central part of the panel members 2, 3 will thus without problems be led straight down. Thus the water with optionally added nutrients will be retained inside the panel members 2, 3 and is led without leakage passed a joint 13 between an upper 3 and lower 2 panel member. Growing-walls 1 of practically any size can be built up with the panel members 2, 3.

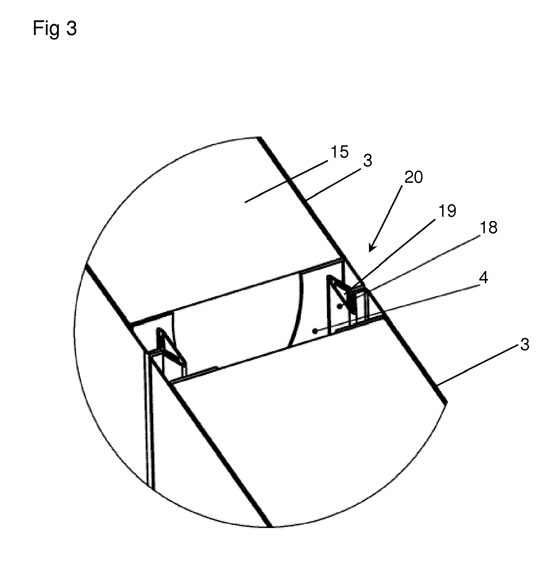

In the preferred embodiment shown in the Figs., especially in Fig. 3, interior fittings 19 are used, which are arranged around longitudinal, outwards angled flanges 19 on each of the two members 3 to be joined together, in order to provide a substantially vertical joint 20. Stabilizing plates 4 are arranged in the preferred embodiment in order to keep the filling 15 of the members 3 in place. The interior fittings 18 extend preferably over the whole or a larger part of the length of the vertical joint 20, but shorter variants of the fittings 18 are also conceivable. In that case they are arranged close to the end surfaces of the panel members 2, 3 in order to be accessible when joining together of the panel members 2, 3.

If desired, further fittings, which are previously known, such as different forms of flat bars or angle bars, can be used in order to anchor the growing-wall to a base or in relation to an upstanding surface, such as a wall.

The supply of water takes place through a watering unit, which comprises a perforated drip hose, which extends upwards from a pump 16 coupled to a water supply. The water supply is controlled by controlling the pressure of the water coming from the pump 16. The pressure must be high enough to transport the water up to the upper end surface 5 of the upper element 3, and the exceeding pressure will decide the supplied amount of water to the growing-wall 1. In a preferred embodiment, a metering unit is also coupled to the pump 16 for the supply of nutrients to the water. Sensors for sensing the moisture content in the wall and the nutrient concentration in the supplied water is advantageously also included in the system for supply of water and nutrient. One alternative is that the supply of water and nutrient is controlled manually.

Since the evaporation from the growing-wall is minimal it will be easy to achieve an equilibrium condition wherein the amount of liquid consumed of the plant is supplied through the drip hose. The actual consumption is decisive for the watering demand, and a surplus will be drained to the collecting vessel 8, where it can be recirculated to the growing-wall 1 through the pump 16. The liquid distribution within the wall 1 will be comparatively even, since water not taken up to a large degree will be transported on downwards. If the water supply is increased, an evenly distributed increase of the water resources will result in the whole growing-wall 1.

Cover plates 21 are suitably arranged at the side edges and at the upper end surface 5, partly in order to prevent undesired evaporation, and partly in order to obtain an aesthetically advantageous look, where the open side surfaces of the panel members as well as the hoses for the supply of water are concealed.

An especially preferred variant of the invention, which is described immediately above, is that prefabricated insulating wall units are used as the panel members 2, 3. In these there are surface layers 9 as well as a filling 15 of insulating material in place as a result of a rational manufacture in large series. Also the described folding is present in some types of wall units, with the aim to prevent liquid from intruding inside of the surface layer. In order to make this work the existing wall units are intended to be mounted so that the end surfaces, which are provided with chutes, are turned downwards. As is described above an opposite function is obtained, i.e. a leakage from the inside and outwards is prevented if the wall units are turned upside down.

However, certain adjustments of the existing, prefabricated wall units have to be made if the result shall be a growing-wall 1 according to the invention. A watering system, comprising a drip hose, a collecting vessel 8 and a pump 16 must be arranged in the way described above. Of course also lead-throughs 6, as has been described above, have to be taken up in one or both of the surface layers 9.

Further, it is an aesthetic advantage if cover plates 21 are arranged at the end surfaces and side surfaces which are not arranged adjacent to any other wall unit. Further undesired evaporation is prevented, as was described above. In a special, advantageous embodiment there is also a control unit for automatic control of the pressure of the pump, based on the surrounding temperature and the moisture content of the wall.

Besides, insulated wall units of the type described make possible a god adjustment to the surroundings with its modules. The wall units also have the necessary qualities for interconnection, attachment and anchorage at walls also in this new field of use.

Thus, the growing-wall according to the invention has a great number of fields of use, e.g. public areas, offices, shopping malls, parks, urban environments. It may also work as a noise barrier at roads, railways, airports or adjacent to machines, e.g. in factories. In all these functions both single and double faced growing-walls can be used.

Finally should be mentioned the possibility to use tempered water inside the panel members. Because of the good insulating properties inside the members the risk for the water to freeze is reduced, and cultivation by growing in the growing-wall can be maintained also during colder periods with risk of frost.

The invention can be further modified within the scope of the appended claims.

## Claims

1. A means for vertical cultivation by growing of plants comprising a panel member (2, 3) arranged on its end having an outer layer (9), in which lead-throughs (6) for plants are provided, and an upper end surface (5) adjoining a front side as well as a back side of the panel member (2, 3), **characterized in that** the member (2, 3) is provided with at least one elongated chute (10) alongside the edges of its upper end surface (5).

2. The means according to claim 1, **characterized in that** the panel member is provided with at least one elongated bead (11) alongside the edges of its lower end surface (12).

3. The means according to claim 2, **characterized in that** the form of the bead (11) and the form of the chute (10) are complementary for interconnection of two panel members (2, 3).

4. The means according to any of the claims 1 - 3, **characterized in that** the panel member (2, 3) has an interior filling (15) of insulating material.

5. The means according to any of the claims 1 - 4, **characterized in that** a perforated hose for water supply to the panel member (2, 3) is arranged alongside its upper end surface (5).

6. The means according to any of the claims 1 - 5, **characterized in that** a collecting vessel (8) is arranged beneath the lower edge of the panel member (2, 3) for collecting liquid therefrom.

7. The means according to any of the claims 1 - 6, **characterized in that** an existing, prefabricated wall unit is used as panel member (2, 3).

8. Use of an insulated wall unit for providing of a means (1) according to any of the claims 1 - 7.

9. A method of providing a means according to any of the claims 1- 7, **characterized in that** a prefabricated, insulated wall unit (2, 3) is arranged in such a way that one end surface (5) having chutes (10) is turned upwards, and lead-throughs (6) through an outer layer (9) of the element (2, 3) are taken up for the insertion of plants.

10. The method according to claim 9, **characterized in that** a number of wall units (2, 3) are arranged in such a way that at least one upper end surface (5) of a first wall unit (2) is arranged to adjoin a lower end surface (12) of a second wall unit (3).
